# EUROPEAN PATENT APPLICATION

(11) **EP 3 261 043 A1**
(43) Date of publication of application: **27.12.2017**
(21) Application number: 17176989.6
(22) Date of filing: 20.06.2017
(51) Int. Cl.: G06Q 30/02

(54) **A METHOD AND A DEVICE FOR DISPLAYING INFORMATION, AND A METHOD AND A DEVICE FOR PUSHING INFORMATION**

(30) Priority: 22.06.2016 WO PCT/CN2016/086686
(71) Applicant: Beijing Xiaomi Mobile Software Co., Ltd., Beijing 100085 (CN)
(72) Inventor: CHENG, Yu, Haidian District, Beijing 100085 (CN); ZHANG, Xu, Haidian District, Beijing 100085 (CN); LIU, Jing, Haidian District, Beijing 100085 (CN)
(74) Representative: Sackin, Robert

(57) **Abstract**

The present disclosure provides a method and a device for displaying information, a method, a device and a system for pushing information, relating to the field of network technology. The method includes: sending (201), by a terminal, bank card information of a bound bank card to a server; sending (203), by the terminal, a geographical location to the server; receiving (207), by the terminal, commercial service information pushed by the server, in which the commercial service information matches the bank card information and the geographical location; and displaying (208), by the terminal, the commercial service information.

## Description

### TECHNICAL FIELD

The present disclosure generally relates to the field of computer networks, and more particularly to, a method and a device for displaying information, and a method and a device for pushing information.

### BACKGROUND

A bank card is a commonly used payment tool in daily life. The bank card may be, for example, a deposit or debit card or a credit card.

A vendor cooperating with a bank may provide an extra special offer in relation to a certain bank card of the bank. For example, for a credit card issued by the bank A, the vendor provides 40%-off discount every Wednesday from 6:00pm-10:00pm. The vendor posts commercial service information to a user via an official website or an official blog indicating the discount. However, the user is unable to acquire the commercial service information without visiting the official website or the official blog of the vendor actively.

### SUMMARY

The present disclosure provides a method and a device for displaying information, a method, a device and a system for pushing information. Technical solutions are described as follows.

According to a first aspect of embodiments of the present disclosure, a method for displaying information is provided, including:
sending bank card information of a bound bank card to a server;
sending a geographical location to the server;
receiving commercial service information pushed by the server, in which the commercial service information matches the bank card information and the geographical location; and
displaying the commercial service information.

In an alternative embodiment, sending bank card information of a bound bank card to a server includes:
sending the bank card information to the server via a payment application, in which the payment application is bound with at least one bank card.

In an alternative embodiment, sending a geographical location to the server includes:
sending the geographical location to the server when booting;
   or,
sending the geographical location to the server at a starting time of a payment application;
   or,
sending the geographical location to the server at a predetermined time interval.

In an alternative embodiment, displaying the commercial service information includes:
displaying a GUI (Graphical User Interface) of a card, in which the GUI of the card includes at least one virtual bank card, in which all or a part of a content of the commercial service information is displayed on a surface of the at least one virtual bank card.

In an alternative embodiment, the content of the commercial service information includes: at least one of a logo, a name, a rating, an address, contact information, discount information, coupon information, group-purchasing information and gift information of a vendor, and a distance between a current location and the vendor.

In an alternative embodiment, the commercial service information displayed on the surface includes the commercial service information matching the bank card information corresponding to the at least one virtual bank card.

In an alternative embodiment, the method also includes:
displaying all of the content of the commercial service information if a first triggering signal is received on the part of the content.

In an alternative embodiment, an aggregation logo is displayed on the surface of the at least one virtual bank card, in which the aggregation logo is configured to indicate that a number of items of the commercial service information corresponding to the at least one virtual bank card exceeds a preset number;
the method also includes:
jumping to a GUI of a list corresponding to the at least one virtual bank card if a second triggering signal is received on the aggregation logo, in which the GUI of the list includes each of the items of the commercial service information corresponding to the at least one virtual bank card respectively.

In an alternative embodiment, the method also includes:
displaying card information corresponding to the at least one virtual bank card if a third triggering signal is received on the surface of the at least one virtual bank card, in which the card information includes at least the commercial service information; and
jumping to a GUI of a list corresponding to the at least one virtual bank card if a fourth triggering signal is received on the commercial service information, in which the GUI of the list includes each of items of the commercial service information corresponding to the at least one virtual bank card respectively.

In an alternative embodiment, the method also includes:
displaying a GUI of a vendor corresponding to the commercial service information if a fifth triggering signal is received on the commercial service information, in which the GUI of the vendor includes information of the vender corresponding to the commercial service information.

In an alternative embodiment, the method also includes:
displaying a notification message after the commercial service information is received; and
displaying the GUI of the card if the notification message is triggered.

In an alternative embodiment, receiving commercial service information pushed by the server includes:
receiving the commercial service information pushed by the server via a short message.

According to a second aspect of embodiments of the present disclosure, a method for pushing information is provided, which includes:
acquiring bank card information bound to a terminal;
acquiring a geographical location of the terminal;
querying commercial service information matching the bank card information and the geographical location; and
pushing the commercial service information to the terminal.

In an alternative embodiment, acquiring bank card information bound to a terminal includes:
acquiring the bank card information sent by a payment application in the terminal, in which the payment application is bound with at least one bank card.

In an alternative embodiment, acquiring a geographical location of the terminal includes:
acquiring the geographical location sent by the terminal at a preset time, in which the preset time comprises at least one of:
   a time when the terminal is booting;
   a starting time of a payment application in the terminal; and
   a time determined by a predetermined time interval.

In an alternative embodiment, querying commercial service information matching the bank card information and the geographical location includes:
querying the commercial service information satisfying a preset condition in a database of the commercial service information, in which the preset condition includes: a supported card type matching the bank card information, and, a distance between a location of a vendor and the geographical location less than a preset threshold.

In an alternative embodiment, pushing the commercial service information to the terminal includes:
pushing the commercial service information to a payment application in the terminal;
   or,
pushing the commercial service information via a short message.

According to a third aspect of embodiments of the present disclosure, a device for displaying information is provided, which includes:
a sending module, configured to send bank card information of a bound bank card to a server and to send a geographical location to the server;
a receiving module, configured to receive commercial service information pushed by the server, in which the commercial service information matches the bank card information and the geographical location; and
a displaying module, configured to display the commercial service information.

In an alternative embodiment, the sending module is configured to send the bank card information to the server via a payment application, in which the payment application is bound with at least one bank card.

In an alternative embodiment, the sending module is also configured to send the geographical location to the server when booting;
or,
the sending module is also configured to send the geographical location to the server at a starting time of a payment application;
or,
the sending module is also configured to send the geographical location to the server at a predetermined time interval.

In an alternative embodiment, the displaying module is configured to display a GUI of a card, in which the GUI of the card includes at least one virtual bank card, in which all or a part of a content of the commercial service information is displayed on a surface of the at least one virtual bank card.

In an alternative embodiment, the content of the commercial service information includes: at least one of a logo, a name, a rating, an address, contact information, discount information, coupon information, group-purchasing information and gift information of a vendor, and a distance between a current location and the vendor.

In an alternative embodiment, the commercial service information displayed on the surface includes the commercial service information matching the bank card information corresponding to the at least one virtual bank card.

In an alternative embodiment, the displaying module is also configured to display all of the content of the commercial service information if a first triggering signal is received on the part of the content.

In an alternative embodiment, an aggregation logo is displayed on the surface of the at least one virtual bank card, in which the aggregation logo is configured to indicate that a number of items of the commercial service information corresponding to the at least one virtual bank card exceeds a preset number; and
the displaying module is also configured to jump to a GUI of a list corresponding to the at least one virtual bank card if a second triggering signal is received on the aggregation logo, in which the GUI of the list includes each of the items of the commercial service information corresponding to the at least one virtual bank card respectively.

In an alternative embodiment, the displaying module is also configured to display card information corresponding to the at least one virtual bank card if a third triggering signal is received on the surface of the at least one virtual bank card, in which the card information includes at least the commercial service information; and to jump to a GUI of a list corresponding to the at least one virtual bank card if a fourth triggering signal is received on the commercial service information, in which the GUI of the list includes each of items of the commercial service information corresponding to the at least one virtual bank card respectively.

In an alternative embodiment, the displaying module is also configured to display a GUI of a vendor corresponding to the commercial service information if a fifth triggering signal is received on the commercial service information, in which the GUI of the vendor includes information of the vendor corresponding to the commercial service information.

In an alternative embodiment, the displaying module is also configured to display a notification message after the commercial service information is received; and to display the GUI of the card if the notification message is triggered.

In an alternative embodiment, the receiving module is configured to receive the commercial service information pushed by the server via a short message.

According to a fourth aspect of embodiments of the present disclosure, a device for pushing information is provided, which includes:
an acquiring module, configured to acquire bank card information bound to a terminal and to acquire a geographical location of the terminal;
a querying module, configured to query commercial service information matching the bank card information and the geographical location; and
a pushing module, configured to push the commercial service information to the terminal.

In an alternative embodiment, the acquiring module is configured to acquire the bank card information sent by a payment application in the terminal, in which the payment application is bound with at least one bank card.

In an alternative embodiment, the acquiring module is configured to acquire the geographical location sent by the terminal at a preset time, in which the preset time includes at least one of:
a time when the terminal is booting;
a starting time of a payment application in the terminal; and
a time determined by a predetermined time interval.

In an alternative embodiment, the querying module is configured to query the commercial service information satisfying a preset condition in a database of the commercial service information, in which the preset condition includes: a supported card type matching the bank card information, and, a distance between a location of a vendor and the geographical location less than a preset threshold.

In an alternative embodiment, the pushing module is configured to push the commercial service information to the payment application in the terminal;
or,
the pushing module is configured to push the commercial service information via a short message.

According to a fifth aspect of embodiments of the present disclosure, a device for displaying information is provided, which includes:
a processor;
a memory configured to store an instruction executable by the processor;
in which the processor is configured to:
   send bank card information of a bound bank card to a server;
   send a geographical location to the server;
   receive commercial service information pushed by the server, in which the commercial service information matches the bank card information and the geographical location; and
   display the commercial service information.

According to a sixth aspect of embodiments of the present disclosure, a device for pushing information is provided, which includes:
a processor;
a memory configured to store an instruction executable by the processor;
in which the processor is configured to:
   acquire bank card information bound to a terminal;
   acquire a geographical location of the terminal;
   query commercial service information matching the bank card information and the geographical location; and
   push the commercial service information to the terminal.

According to a seventh aspect of embodiments of the present disclosure, a system for pushing information is provided, which includes: a terminal and a server for pushing information; in which
the terminal includes the device for displaying information according to the third aspect; and the server for pushing information includes the device for pushing information according to the fourth aspect;
or,
the terminal includes the device for displaying information according to the fifth aspect; and the server for pushing information includes the device for pushing information according to the sixth aspect.

The present disclosure includes the following advantageous effects.

By acquiring the bank card information and the geographical location of the terminal by the server, querying the commercial service information matching the bank card information and the geographical location, and pushing the commercial service information to the terminal, a problem in the related art that a user is able to acquire the commercial service information only when the user visits an official website or an official blog of the vendor actively may be solved, and an effect that the server may push the commercial service information to the terminal actively and the user may acquire the commercial service information without querying may be achieved.

It is to be understood that both the foregoing general description and the following detailed description are exemplary and explanatory only and are not restrictive of the present disclosure.

### BRIEF DESCRIPTION OF THE DRAWINGS

Accompanying drawings herein are incorporated in and constitute a part of the specification, and illustrate example embodiments in line with the present disclosure, and serve to explain the principle of the present disclosure together with the description.
Fig. 1 is a schematic diagram illustrating a system for pushing information according to an example embodiment of the present disclosure;
Fig. 2 is a flow chart illustrating a method for pushing information according to an example embodiment of the present disclosure;
Fig. 3 is a flow chart illustrating a method for pushing information according to another example embodiment of the present disclosure;
Fig. 4A illustrates a flow chart of displaying commercial service information on a terminal according to an example embodiment of the present disclosure;
Fig. 4B is a schematic diagram illustrating an interface when commercial service information is displayed on a terminal according to an example embodiment of the present disclosure;
Fig. 5A illustrates a flow chart of displaying commercial service information on a terminal according to an example embodiment of the present disclosure;
Fig. 5B-Fig. 5F illustrate schematic diagrams illustrating interfaces when commercial service information is displayed on a terminal according to an example embodiment of the present disclosure;
Fig. 6 is a flow chart illustrating a method for pushing information according to another example embodiment of the present disclosure;
Fig. 7 is a block diagram illustrating a device for displaying information according to an example embodiment of the present disclosure;
Fig. 8 is a block diagram illustrating a device for pushing information according to an example embodiment of the present disclosure;
Fig. 9 is a block diagram illustrating a terminal according to an example embodiment of the present disclosure; and
Fig. 10 is a block diagram illustrating a server according to an example embodiment of the present disclosure.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of devices and methods consistent with aspects related to the invention as recited in the appended claims.

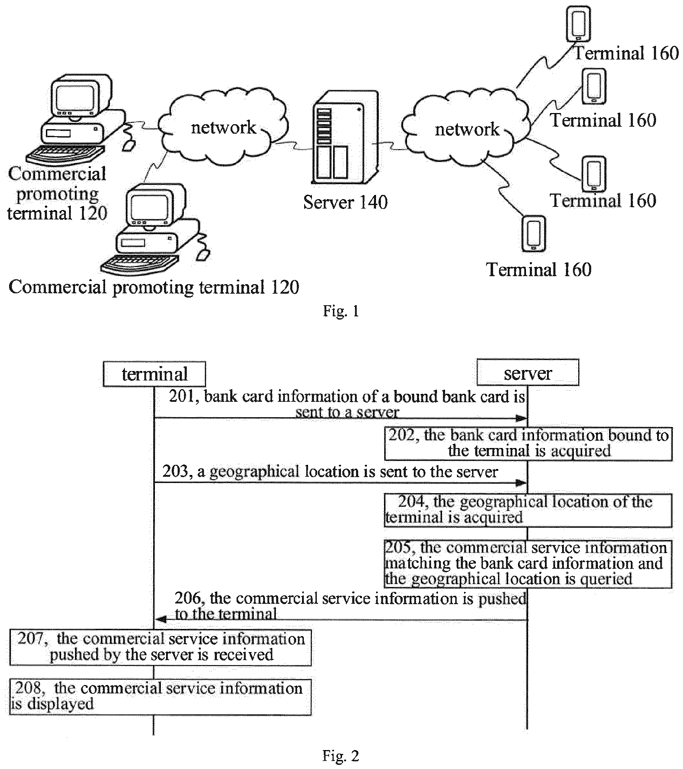

Fig. 1 is a schematic diagram illustrating a system for pushing information according to an example embodiment of the present disclosure. The system includes: a commercial promoting terminal 120, a server 140 and a terminal 160.

The commercial promoting terminal 120 is a terminal used by a merchant. The commercial promoting terminal 120 may be a smart phone, a tablet computer, a portable computer and a desktop computer etc.. Alternatively, a promoting client is running in the commercial promoting terminal 120, and the promoting client is configured to upload commercial service information to the server 140. Alternatively, the promoting client is a promoting application or a webpage client.

Alternatively, the commercial promoting terminal 120 is connected to the server 140 via a network.

The server 140 may be one server, a plurality of servers or a cloud computing center. Alternatively, the server 140 may be a background server of a payment application, in which the payment application may be a single functional application only configured with a payment function, or may be an integrated application combining with the payment function. The server 140 is configured to manage the commercial service information uploaded by the commercial promoting terminal 120, and to push the commercial service information to the terminal 160 selectively.

Alternatively, the server 140 is also connected to the terminal 160 via a network.

The terminal 160 is a terminal used by a common user. The terminal 160 may be a smart phone, a tablet computer, a portable computer or a desktop computer etc.. Alternatively, a payment application is installed on the terminal 160. Alternatively, a locating module is set in the terminal 160, in which the locating module may be at least one of an iBeacon locating module, a GPS (Global Positioning System) locating module, a wireless local area network (WLAN), such as WIFI (registered trade mark) locating module and a base station locating module. The terminal 160 is configured with a function for locating a geographical location thereof.

The terminal 160 is configured to receive the commercial service information sent by the server 140, and to display the commercial service information to the user.

Alternatively, the commercial service information includes but is not limited to: at least one of discount information, group-purchasing information, advertising information, new product introducing information and special offer information of a vendor.

Alternatively, the network uses standard communication technology and/or protocol. Generally, the network is the Internet, or other networks including but is not limited to the Local Area Network (LAN), Metropolitan Area Network (MAN), Wide Area Network (WAN) and mobile network, wired network, wireless network, private network or virtual private network or any combination thereof. Technology or format including Hypertext Markup Language (HTML) or Extensive Markup Language (XML) etc. may be used to represent data exchanged via the network. In addition, a common encryption technology such as Security Socket Layer (SSL), Transport Layer Security (TLS), Virtual Private Network (VPN) or Internet Protocol Security (IPsec) etc. may be used to encrypt all or some links. In another embodiment, an entity may also use a custom and/or private data communication technology to replace or supplement the data communication technology described above. The network may include a link to other networks (such as Internet), according to embodiments of the present disclosure.

Fig. 2 is a flow chart illustrating a method for pushing information according to an example embodiment of the present disclosure. This embodiment of the present disclosure exemplifies that the method is applied to the server 140 and the terminal 160 illustrated in Fig. 1. The method includes the following acts.

In act 201, a terminal sends bank card information of a bound bank card, bound to the terminal, to a server.

The bound bank card may include a deposit or debit card or a credit card. The deposit card may be a "saving money before withdrawing" card supporting a basic service including saving, withdrawing, transferring and remitting etc.; the credit card may be a "buy now, pay later" payment tool supporting microcredit or a card supporting purchasing and consuming at a certain vendor or saving and withdrawing cash at a specific bank.

The bank card information may include: at least one of a bank name, a card type, account information, level information and holder information corresponding to the bank card. As the commercial service information corresponds to the card type generally, in some embodiments, the bank card information includes at least the card type. The card type is classified by the bank, and the same bank may release different bank cards with different types. For example, the card type includes: a student card, a transportation card, a fuel-filling cooperation card, a food credit card and a shopping credit card etc..

Alternatively, the terminal sends the bank card information to the server at a preset time interval, or sends the bank card information to the server when the terminal is bound with a new bank card.

In act 202, the server acquires the bank card information bound to the terminal.

In act 203, the terminal sends a geographical location to the server.

Alternatively, the terminal may acquire the geographical location thereof via a locating technology and send the geographical location to the server.

In act 204, the server acquires the geographical location of the terminal.

In act 205, the server queries the commercial service information matching the bank card information and the geographical location.

Alternatively, if the card type supported by the commercial service information matches the bank card information in the terminal, and a distance between the geographical location of the terminal and a location of a vendor is less than a preset threshold, the location of the vendor is the geographical location of the vendor corresponding to the commercial service information.

Alternatively, a corresponding relationship between the bank card information, the location of the vendor and the commercial service information is stored in the server. The corresponding relationship is shown in Table. 1.

**Table. 1**

| bank card information | location of vendor | commercial service information |
|---|---|---|
| gold card of XX bank | location 1 | 40%-off discount every Wednesday |
| food credit card of YY bank | location 2 | 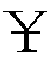 20 coupon for free |
| undergraduate credit card of ZZ bank | location 3 | 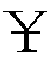 168 for double persons in a group-purchasing activity |
| black diamond deposit card of MM bank | location 4 | free dinner on Monday |
| ...... | ...... | ..... |

In act 206, the server pushes the commercial service information to the terminal.

In act 207, the terminal receives the commercial service information pushed by the server.

In act 208, the terminal displays the commercial service information.

In conclusion, with the method for pushing information according to embodiments of the present disclosure, by acquiring the bank card information and the geographical location of the terminal by the server, querying the commercial service information matching the bank card information and the geographical location, and pushing the commercial service information to the terminal, a problem in the related art that a user is able to acquire the commercial service information only when the user visits an official website or an official blog of the vendor actively may be solved, and an effect that the server may push the commercial service information to the terminal actively and the user may acquire the commercial service information without querying may be realized.

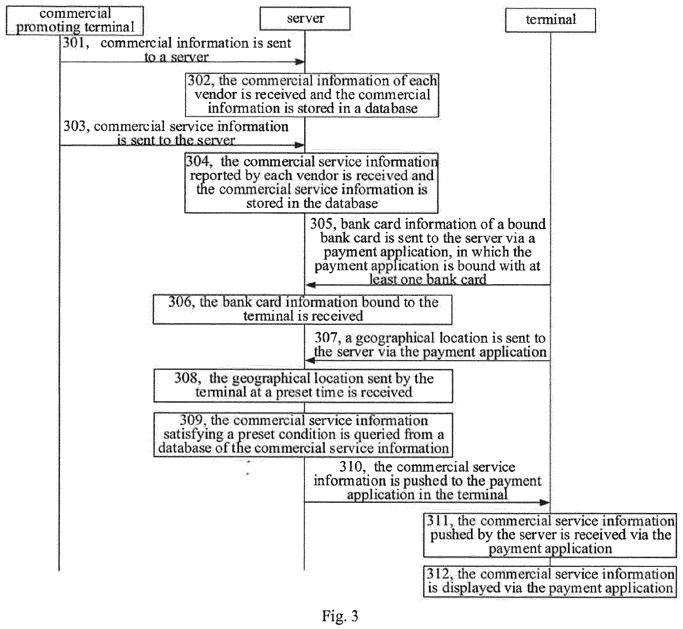

Fig. 3 is a flow chart illustrating a method for pushing information according to another example embodiment of the present disclosure. This embodiment of the present disclosure exemplifies that the method is applied to the system for pushing information illustrated in Fig. 1. The method includes following acts.

In act 301, a commercial promoting terminal reports commercial information to a server.

A vendor may register a commercial account in the server via the commercial promoting terminal. In a process of registering, each vendor reports the commercial information to the server.

Alternatively, the commercial information includes: an account, a name, a geographical location, a service content and a user rating of the vendor etc..

In act 302, the server receives the commercial information of each vendor and stores the commercial information in a database.

In act 303, the commercial promoting terminal reports commercial service information to the server.

Alternatively, the vendor has a cooperation relationship with one or more banks. During different periods of time, the vendor may launch special offers for a bank card of a certain type issued by a certain bank. At this moment, the commercial promoting terminal reports the commercial information to the server.

Alternatively, commercial service information has attributes including the supported card type, identification or a location corresponding to the vendor, and a expiry date.

In act 304, the server receives the commercial service information reported by each vendor and stores the commercial service information in the database.

In act 305, the terminal sends bank card information of a bound bank card to the server via a payment application, in which the payment application is bound with at least one bank card.

Alternatively, the payment application may be a single functional application only configured with a payment function, or may be an integrated application combining with the payment function.

Alternatively, the bank card information includes: at least one of a name of a bank issuing the bank card, a card type, account information, level information and holder information corresponding to the bank card. As the commercial service information corresponds to the card type generally, in some embodiments, the bank card information includes at least the card type. The card type is classified by the bank, and a same bank may release different bank cards with different types. For example, the card type includes: a student card, a transportation card, a fuel-filling cooperation card, a food credit card and a shopping credit card etc..

Alternatively, the payment application in the terminal sends the bank card information to the server at a preset time interval, or sends the bank card information to the server when the terminal is starting, or sends the bank card information to the server when the terminal is bound with a new bank card.

In act 306, the server receives the bank card information bound to the terminal.

In act 307, the terminal sends a geographical location to the server via the payment application.

Alternatively, the terminal may acquire the geographical location thereof via a locating technology and send the geographical location to the server.

In order to ensure that the geographical location sent by the terminal to the server is a relatively real-time geographical location, the terminal may send the geographical location to the server when booting; or the terminal may send the geographical location to the server when the payment application is starting; or the terminal may send the geographical location to the server at a predetermined time interval. An implementation way of this act is not limited in embodiments of the present disclosure.

In act 308, the server receives the geographical location sent by the terminal at a preset time.

The preset time includes at least one of: a time when the terminal is booting; a starting time of the payment application in the terminal; and a time determined by a predetermined time interval.

Alternatively, act 307 and act 305 are independent in terms of execution time and the number of executions. For example, act 305 may be executed only when the new card is bound, while act 307 may be executed several times at the predetermined time interval.

In act 309, the server queries the commercial service information satisfying a preset condition from a database of the commercial service information.

Alternatively, the preset condition includes: the supported card type matching the bank card information, and, a distance between the location of the vendor and the geographical location being less than a preset threshold. The location of the vendor is the geographical location of the vendor corresponding to the commercial service information.

In act 310, the server pushes the commercial service information to the payment application in the terminal.

Alternatively, the payment application in the terminal may send a long HTTP connection request in advance and wait for a response of the server thereafter. The server may establish a connection with the payment application in the terminal after receiving the long HTTP connection request. Instead of sending the commercial service information immediately, the server may suspend the connection. The server may send the commercial service information to the payment application in the terminal via the connection actively, if the commercial service information exists in the server. After the commercial service information is received, the payment application in the terminal may process the commercial service information and send a next long HTTP connection request to the server.

Alternatively, the pushing of the commercial service information may be realized by using other pushing techniques between the server and the terminal.

In act 311, the terminal receives the commercial service information pushed by the server via the payment application.

In act 312, the terminal displays the commercial service information via the payment application.

Alternatively, the terminal displays the commercial service information via a GUI of a card in the payment application. The terminal may display the commercial service information in a displaying format including at least one of a logo, a list, a combination of pictures and text, and an animation.

The displaying format of the commercial service information is not limited in embodiments of the present disclosure.

In conclusion, according to the method for pushing information in embodiments of the present disclosure, by acquiring the bank card information and the geographical location of the terminal by the server, querying the commercial service information corresponding to the bank card information and the geographical location, and pushing the commercial service information to the terminal, a problem in the related art that a user is able to acquire the commercial service information only when the user visits an official website or an official blog of the vendor actively may be solved, and an effect that the server may push the commercial service information to the terminal actively and the user may acquire the commercial service information without querying may be realized.

According to the method for pushing information provided by embodiments of the present disclosure, by querying the commercial service information matching the bank card information and the geographical location, the commercial service information pushed to the user may be strongly practical, highly effective and accurate information, which provides a better referable value for the user.

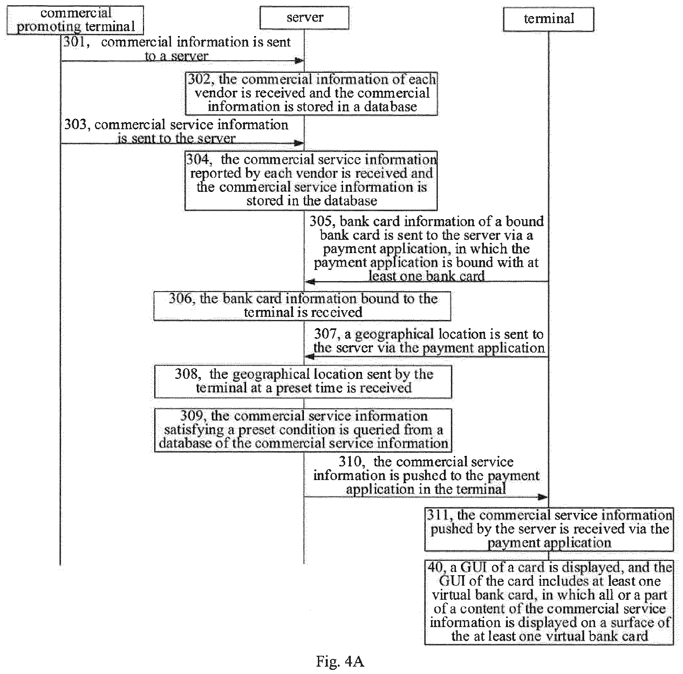

In an alternative embodiment, act 312 may be alternatively realized as act 40, as shown in Fig. 4A.

In act 40, the terminal displays a GUI of a card, and the GUI of the card includes at least one virtual bank card, in which all or a part of a content of the commercial service information is displayed on a surface of the at least one virtual bank card.

Alternatively, each virtual bank card corresponds to a bound bank card. Alternatively, the surface of the virtual bank card is the same as or similar to that of a physical bank card.

Alternatively, the content of the commercial service information includes: at least one of a logo, a name, a rating, an address, contact information, discount information, coupon information, group-purchasing information and gift information of a vendor, and a distance between a current location and the vendor.

Alternatively, the part of the content of the commercial service information is displayed on the surface of each virtual bank card, in which the part of the content is an item of the content or a combination of several items of the content.

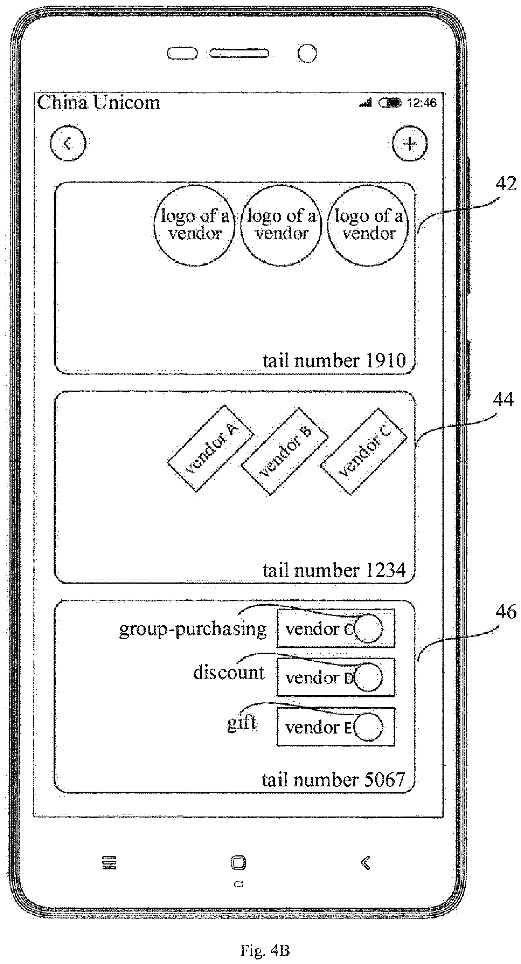

Schematically, referring to Fig. 4B, at an upper-right corner of the surface of the virtual bank card 42, three logos are equally arranged in a row, in which each of the three logos may be pictures or a combination of pictures and text. At the surface of another virtual bank card 44, three names are equally arranged at an angle of 45 degree, in which the three names may be text. At the surface of yet another virtual bank card 46, the names of vendors in the commercial service information and keywords "group-purchasing", "discount" and "gift" are equally arranged in a column, in which "group-purchasing" indicates that the commercial service information is the group-purchasing information, "discount" indicates that the commercial service information is the discount information, and "gift" indicates that the commercial service information is the gift information. Similarly, there may also be a keyword "favorable", indicating that the commercial service information is the favorable price information.

In conclusion, according to the method for pushing information in embodiments of the present disclosure, by displaying the all or the part of the content of the commercial service information on the virtual bank card, a space for displaying may be saved effectively, and an effect of displaying is clean and straightforward. The user may know where the commercial service information comes from by visualizing the logo, and may know which type the commercial service information belongs to by visualizing the keywords, thus the commercial service information is strongly identifiable and easily readable information.

In an alternative embodiment, as shown in Fig. 4B schematically, the commercial service information displayed on the surface of the virtual bank card is the commercial service information corresponding to the bank card information of the virtual bank card, which means that the commercial service information displayed on the surface of the virtual bank card 42 corresponds to the bank card information of the virtual bank card 42; the commercial service information displayed on the surface of the virtual bank card 44 corresponds to the bank card information of the virtual bank card 44; and the commercial service information displayed on the surface of the virtual bank card 46 corresponds to the bank card information of the virtual bank card 46.

It should be noted that the displaying method mentioned above is a way for displaying the commercial service information matching each virtual bank card distinguishingly. Those skilled in the art may use other displaying methods such as using different GUIs each of which corresponds to one virtual bank card, or using different background colors each of which corresponds to one virtual bank card, or using different displaying shapes each of which corresponds to one virtual bank card, for displaying distinguishingly.

In conclusion, according to the method for pushing information in embodiments of the present disclosure, according to the arrangement of the commercial service information, the item of the bank card information corresponding to the commercial service information may be reflected, and thus an effect of saving displaying space is realized.

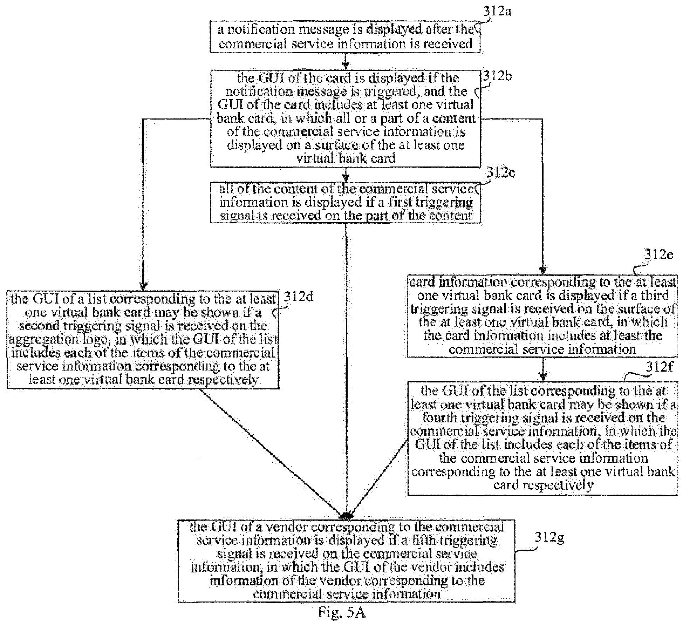

Embodiments of the present disclosure also provide a method for displaying commercial service information on a terminal. Referring to Fig. 5A, act 312 may be alternatively realized as acts 312a-312g.

In act 312a, a notification message is displayed after the commercial service information is received.

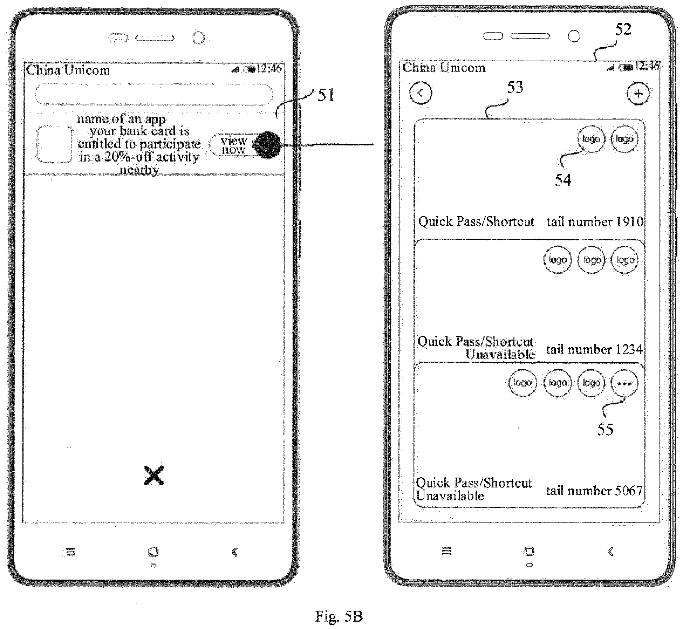

Schematically, as shown in Fig. 5B, the notification message is displayed in a message bar 51 after the commercial service information is received by the terminal. The notification message includes: a name of an application, text "your bank card is entitled to participate in a 20%-off activity nearby" and a button "view now".

In act 312b, the GUI of the card is displayed if the notification message is triggered, and the GUI of the card includes at least one virtual bank card, in which all or a part of a content of the commercial service information is displayed on a surface of the at least one virtual bank card.

The terminal displays the GUI 52 after a user clicks the button "view now". Three virtual bank cards 53 are displayed on the GUI 52, in which the three virtual bank cards include a first bank card of which a tail number is 1910, a second bank card of which the tail number is 1234 and a third bank card of which the tail number is 5067. Each of the three virtual bank cards 53 corresponds to a bound physical bank card.

For example, if the part of the content of the commercial service information is displayed on the surface of the virtual bank card, in which the part of the content is a logo of a vendor, vendor logos 54 may be displayed on the surface of one of the virtual bank cards 53. Fig. 5B exemplifies that the vendor logos 54 are displayed on the surfaces of the three virtual bank cards. Two of the vendor logos 54 are displayed on the surface of the first bank card, and three of the vendor logos 54 are displayed on the surface of the second bank card.

Alternatively, if the number of the vendor logos 54 corresponding to one of the virtual bank cards 53 exceeds a preset number, an aggregation logo 55 is displayed on a surface of the one of the virtual bank cards 53, in which the aggregation logo 55 is configured to indicate that the number of items of the commercial service information corresponding to one virtual bank card 53 exceeds the preset number. Alternatively, the preset number is measured according to the number of the items of the commercial service information; alternatively, the preset number is measured according to the number of the vendors corresponding to the commercial service information; alternatively, the preset number is measured according to the number of types corresponding to the commercial service information.

For example, if the number of the vendor logos 54 corresponding to the third bank card exceeds three, the aggregation logo 55 may be displayed on the surface of the third bank card.

Alternatively, the commercial service information displayed on the surface of one virtual bank card 53 is the commercial service information matching bank card information of this virtual bank card 53. In Fig. 5B, the vendor logos 54 displayed on the surface of each of the virtual bank cards 53 correspond to the commercial service information matching the bank card information of the virtual bank card 53 respectively.

Alternatively, the part of the content of the commercial service information displayed on the surface of a virtual bank card 53 (the vendor logos 54) may be configured as an entry control of all of the content of the commercial service information. At this moment, act 312c is included alternatively.

In act 312c, all of the content of the commercial service information is displayed if a first triggering signal is received on the part of the content.

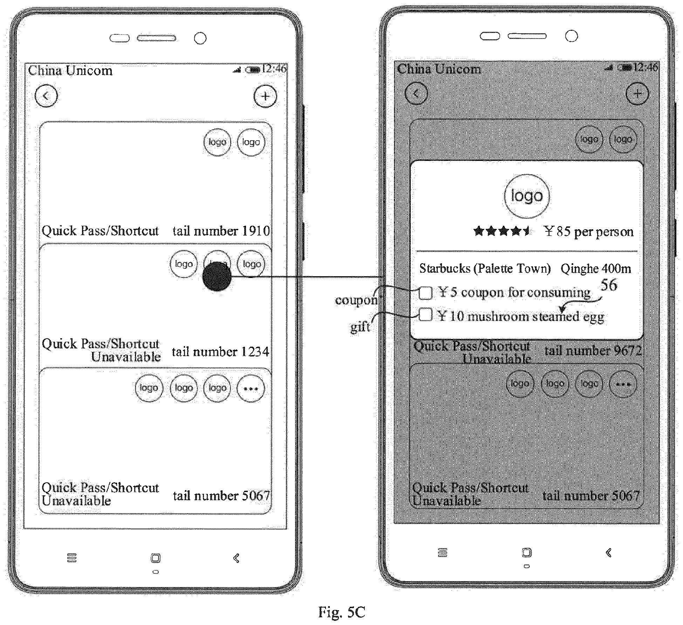

Schematically, as shown in Fig. 5C, the terminal may display all of the content of the commercial service information 56 via a pop-up box if a second vendor logo on the second bank card is clicked. All of the content of the commercial service information 56 may include: a logo, a rating, per capita consumption Y85, a name, an address of a vendor, a distance between a current location and the vendor, coupon information and free food information etc..

Alternatively, the terminal may display all of the content of the commercial service information 56 by using a whole GUI. If all of the content of the commercial service information 56 is unable to be displayed completely in one GUI, a long GUI with a scroll bar may be used for displaying, or several GUIs are used for displaying by page-turning.

In act 312d, the GUI of a list corresponding to the at least one virtual bank card may be shown if a second triggering signal is received on the aggregation logo, in which the GUI of the list includes each of the items of the commercial service information corresponding to the at least one virtual bank card respectively.

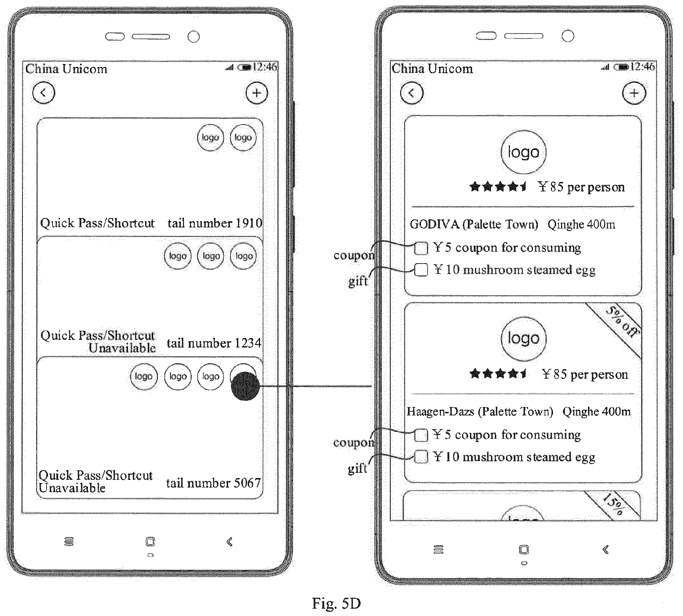

Schematically, as shown in Fig. 5D, the terminal may jump to the GUI of the list corresponding to the third bank card if the aggregation logo on the third bank card is clicked, in which the GUI of the list includes a plurality of items of the commercial service information corresponding to the third bank card. For example, Fig. 5D exemplifies three items of the commercial service information corresponding to the third bank card.

In act 312e, card information corresponding to the at least one virtual bank card is displayed if a third triggering signal is received on the surface of the at least one virtual bank card, in which the card information includes at least the commercial service information.

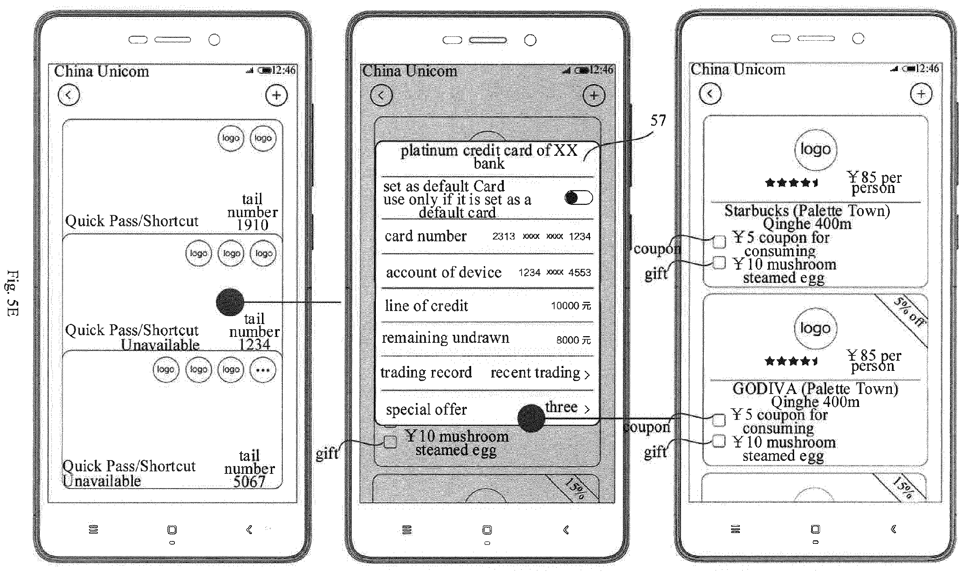

Schematically, as shown in Fig. 5E, the terminal may display the card information corresponding to the second bank card if the surface of the second bank card is clicked, in which the card information includes: a name of a bank, a card type, whether it is a default card, a number of the bank card, an account of a device, line of credit, remaining undrawn, a trading record, and the commercial service information "special offer".

In act 312f, the GUI of the list corresponding to the at least one virtual bank card may be shown if a fourth triggering signal is received on the commercial service information, in which the GUI of the list includes each of the items of the commercial service information corresponding to the at least one virtual bank card respectively.

The terminal may jump to the GUI of the list corresponding to the second bank card if the "special offer" is clicked, in which the GUI of the list includes three items of the commercial service information corresponding to the second bank card.

In act 312g, the GUI of a vendor corresponding to the commercial service information is displayed if a fifth triggering signal is received on the commercial service information, in which the GUI of the vendor includes information of the vendor corresponding to the commercial service information.

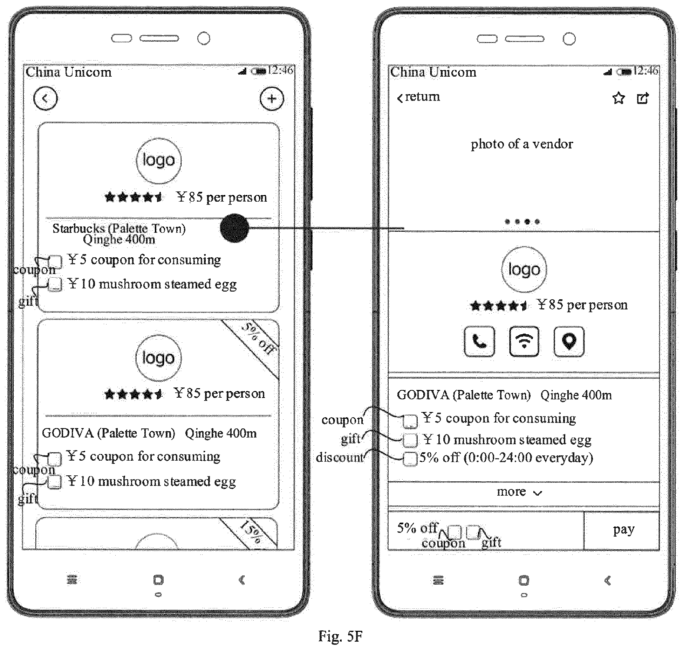

Schematically, as shown in Fig. 5F, the terminal may display the GUI of the vendor corresponding to the commercial service information if one item of the commercial service information is clicked, in which the GUI of the vendor includes: a photo, a logo, a phone number, a WiFi password, an illustrated map, an address, a coupon, free food information, discount information and a payment entrance of the vendor etc..

It should be noted that act 312a is an optional step, and the GUI of the card in act 312b may be triggered and displayed by using other methods. For example, the GUI may be triggered and displayed by using a card management menu of a payment application, or be triggered and displayed after paying via the payment application, or be triggered and displayed after a new bank card is bound, or be triggered and displayed while moving to a new location, and so on.

It should be noted that, act 312c may be an optional step. If all of the content of the commercial service information is displayed on the surface of the virtual credit card on the GUI of card in act 312b, the act 312c may be omitted.

It should also be noted that act 312d, act 312e, act 312f and act 312g mentioned above are independent with each other and are optional steps. Those skilled in the art may realize these four acts in other embodiments by choosing one of the four acts, or combining two or three of the four acts, which is not limited in embodiments of the present disclosure.

In conclusion, according to the method for pushing information of embodiments of the present disclosure, by displaying the commercial service information separately for each bank card, the commercial service information corresponding to each bank card may be clearly displayed to a user, and thus an effect of saving displaying space may be realized.

According to embodiments of the present disclosure, by displaying all of the content of the commercial service information after the part of the content of the commercial service information is clicked, more commercial service information may be displayed on the GUI of the card, the user may view the commercial service information the user is interested in, so that the displaying space may be saved and amount of effective information displayed on the GUI of the card may be increased.

According to embodiments of the present disclosure, the list of the commercial service information may be displayed by triggering the aggregation logo, so that more content of a virtual bank card may be displayed on the GUI of the card if there is too much commercial service information corresponding to this virtual bank card. The user may view the commercial service information when the user is interested in the commercial service information corresponding to this virtual bank card, so that the displaying interference to the virtual bank card from the commercial service information may be avoided and thus interface utilization may be improved.

According to embodiments of the present disclosure, the list of the commercial service information may be displayed by triggering the surface of the card, such that the user may view the commercial service information corresponding to a virtual bank card in another GUI intensively if the user is interested in the commercial service information corresponding to this virtual bank card. In this way, the commercial service information the user is interested in may be gathered in a same GUI. Thus, the GUI displaying more commercial service information may be provided to the user and a displaying efficiency may be improved.

According to embodiments of the present disclosure, the list of the commercial service information may be displayed by triggering the commercial service information, such that the user may view the commercial service information corresponding to a virtual bank card in another GUI intensively after the user views the card information of this visual bank card (for example, a balance of this visual bank card is sufficient) and if the user is interested in the commercial service information corresponding to this virtual bank card. In this way, the commercial service information the user is interested in may be gathered in a same GUI. Thus, the GUI displaying more commercial service information may be provided to the user and the displaying efficiency may be improved.

According to embodiments of the present disclosure, the GUI of the vendor may be displayed by triggering the commercial service information, such that the user may get access to the GUI of the vendor quickly to acquire the address, the contact information and navigation information of the vendor if the user is interested in the commercial service information of the vendor, such that the user is guided to use a service provided by the vendor on-line or off-line. Thus, a difficulty of acquiring by the user the commercial service information may be reduced and an operating procedure of the user may be simplified under the usage scenario.

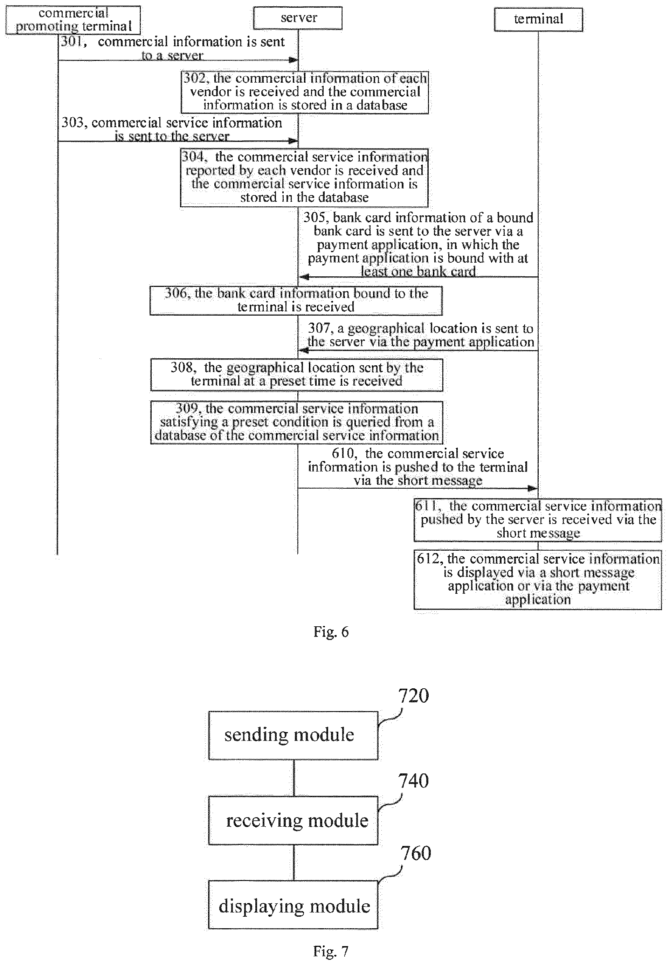

In an alternative embodiment, a process for pushing information described above may be realized via a short message service. That is, acts 310-312 may be alternatively realized as acts 610-611, as shown in Fig. 6.

In act 610, the server pushes the commercial service information to the terminal via the short message.

In act 611, the terminal receives the commercial service information pushed by the server via the short message.

In act 612, the terminal displays the commercial service information via a short message application or via the payment application.

Alternatively, the terminal displays the commercial service information via a short message application.

Alternatively, if the payment application has a right to read the short message, the terminal may also display the commercial service information via the payment application.

In conclusion, according to the method for pushing information in embodiments of the present disclosure, by pushing the commercial service information via the short message, the terminal may acquire the commercial service information without data network, so that reliability of information pushing may be improved.

It should be additionally noted that in method embodiments described above, a method for acquiring the geographical location by the terminal includes but is not limited to: at least one of the iBeacon technology, GPS technology, WIFI locating technology and base station locating technology.

The iBeacon technology is introduced as follows: a Bluetooth Low Energy (BLE) device is disposed in an off-line shop of a vendor, in which the BLE device may send a broadcast frame periodically, and the terminal supporting BLE may receive the broadcast frame and locate according to the broadcast frame. Alternatively, the broadcast frame includes an UUID field, a Major field, a Minor field, and a Measured Power field. UUID is a 128-bits identifier conforming with ISO/IEC 11578:19126 Standard; the Major filed includes address information and advisory information inputted by the vendor; the Minor filed includes an identification of the off-line shop; the Measured Power filed includes a referenced received signal strength when a distance between the BLE device and a user device is 1m, such that the user device may estimate the distance between the BLE device and the user device according to the referenced received signal strength and a real received signal strength.

The GPS technology is a locating technology based on satellite positioning. Besides a GPS system of USA, common satellite positioning system also includes BeiDou Navigation Satellite System (BDS) of China, and Global Navigation Satellite System (GLONASS) of Russia. In embodiments of the present disclosure, the satellite positioning systems are collectively known as GPS technology. The terminal may compute a distance between the terminal and three or four satellites via the received signals sent by the three or four satellites, and then obtain a location (X, Y, Z) of the terminal according to a distance formula in a 3-D coordinate system.

The WiFi locating technology locates the terminal according to a wireless access point where the terminal resides. For example, if an installing location registered when the wireless access point is installed is "XX Building, XX Office", then the location of the terminal, which is "XX Building, XX Office", may be queried according to the identification of the wireless access point when the terminal resides in the wireless access point.

The base station locating technology is also known as Location Based Service (LBS). Time of Arrival (TOA) or Time Difference of Arrival (TDOA) of downlink pilot signals of different base stations may be acquired respectively by measuring the downlink pilot signals of different base stations by the terminal of the user. The location of the terminal may be computed by using a triangle formula estimating algorithm and combining the location of the base station with measuring results.

It should be noted that acts executed by the commercial promoting terminal in method embodiments of the present disclosure may be realized independently as the method for pushing information at the commercial promoting terminal side. Acts executed by the server may be realized independently as the method for pushing information at the server side. Acts executed by the terminal may be realized independently as a method for displaying information at the terminal side.

Device embodiments for implementing the method embodiments of the present disclosure are described as follows. Concerning details which are not disclosed in the device embodiments, reference is made to the method embodiments of the present disclosure.

Regarding the device in these embodiments, the specific ways of implementing operations by each module have been illustrated in the method embodiments, which will not be further elaborated herein.

Fig. 7 is a block diagram illustrating a device for displaying information according to an example embodiment of the present disclosure. The device may be realized as all or a part of the terminal illustrated in Fig. 1 via a specialized hardware circuit or a combination of hardware and software. The device includes a sending module 720, a receiving module 740, and a displaying module 760.

The sending module 720 is configured to send bank card information of a bound bank card to a server. The sending module 720 is further configured to send a geographical location to the server.

The receiving module 740 is configured to receive commercial service information pushed by the server, in which the commercial service information matches the bank card information and the geographical location.

The displaying module 760 is configured to display the commercial service information.

In an alternative embodiment, the sending module 720 is configured to send the bank card information to the server via a payment application, and the payment application is bound with at least one bank card.

In an alternative embodiment, the sending module 720 is further configured to send the geographical location to the server when booting; or the sending module 720 is further configured to send the geographical location to the server at a starting time of a payment application; or the sending module 720 is further configured to send the geographical location to the server at a predetermined time interval.

In an alternative embodiment, the displaying module 760 is configured to display a GUI of a card, and the GUI of the card includes at least one virtual bank card, in which all or a part of a content of the commercial service information is displayed on a surface of the at least one virtual bank card.

The content of the commercial service information includes: at least one of a logo, a name, a rating, an address, contact information, discount information, coupon information, group-purchasing information and gift information of a vendor, and a distance between a current location and the vendor.

In an alternative embodiment, the commercial service information displayed on the surface is the commercial service information matching the bank card information corresponding to the at least one virtual bank card.

In an alternative embodiment, the displaying module 760 is further configured to display all of the content of the commercial service information if a first triggering signal is received on the part of the content.

In an alternative embodiment, an aggregation logo is displayed on the surface of the at least one virtual bank card, and the aggregation logo is configured to indicate that a number of items of the commercial service information corresponding to the at least one virtual bank card exceeds a preset number.

The displaying module 760 is further configured to jump to a GUI of a list corresponding to the at least one virtual bank card if a second triggering signal is received on the aggregation logo, in which the GUI of the list includes each of the items of the commercial service information corresponding to the at least one virtual bank card respectively.

In an alternative embodiment, the displaying module 760 is further configured to display card information corresponding to the at least one virtual bank card if a third triggering signal is received on the surface of the at least one virtual bank card, in which the card information includes at least the commercial service information; and to jump to a GUI of a list corresponding to the at least one virtual bank card if a fourth triggering signal is received on the commercial service information, in which the GUI of the list includes each of the items of the commercial service information corresponding to the at least one virtual bank card respectively.

In an alternative embodiment, the displaying module 760 is further configured to display a GUI of a vendor corresponding to the commercial service information if a fifth triggering signal is received on the commercial service information, in which the GUI of the vendor includes information of the vendor corresponding to the commercial service information.

In an alternative embodiment, the displaying module 760 is further configured to display a notification message after the commercial service information is received; and to display the GUI of the card if the notification message is triggered.

In an alternative embodiment, the receiving module 740 is configured to receive the commercial service information pushed by the server via a short message.

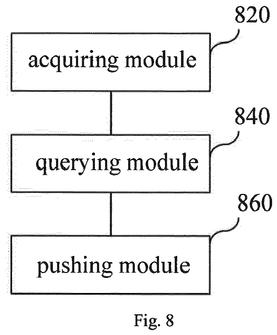

Fig. 8 is a block diagram illustrating a device for displaying information according to an example embodiment of the present disclosure. The device may be realized as all or a part of the server illustrated in Fig. 1 via a specialized hardware circuit or a combination of hardware and software. The device includes an acquiring module 820, a querying module 840, and a pushing module 860.

The acquiring module 820 is configured to acquire bank card information bound to a terminal. The acquiring module 820 is further configured to acquire a geographical location of the terminal.

The querying module 840 is configured to query commercial service information matching the bank card information and the geographical location.

The pushing module 860 is configured to push the commercial service information to the terminal.

In an alternative embodiment, the acquiring module 820 is configured to acquire the bank card information sent by a payment application in the terminal, in which the payment application is bound with at least one bank card.

In an alternative embodiment, the acquiring module 820 is configured to acquire the geographical location sent by the terminal at a preset time, in which the preset time includes at least one of:
a time when the terminal is booting;
a starting time of the payment application in the terminal; and
a time determined by a predetermined time interval.

In an alternative embodiment, the querying module 840 is configured to query the commercial service information satisfying a preset condition in a database of the commercial service information, in which the preset condition includes: a supported card type matching the bank card information, and, a distance between a location of a vendor and the geographical location being less than a preset threshold.

In an alternative embodiment, the pushing module 860 is configured to push the commercial service information to the payment application in the terminal; or the pushing module 860 is configured to push the commercial service information via a short message.

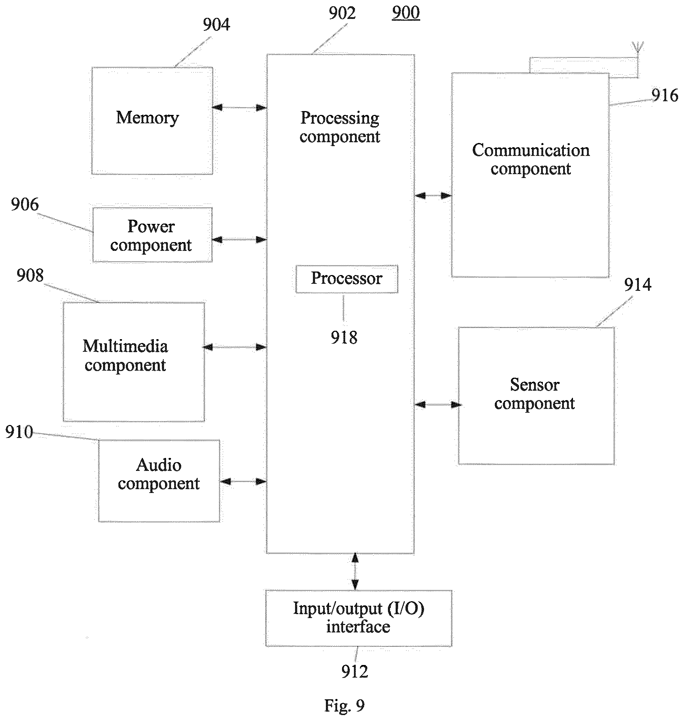

Fig. 9 is a block diagram illustrating a terminal according to an example embodiment of the present disclosure. For example, the terminal 900 may be a mobile phone, a computer, a digital broadcasting terminal, a message sending and receiving equipment, a game controller, a tablet device, a medical device, a fitness equipment, a personal digital assistant or the like.

Referring to Fig. 9, the terminal 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the terminal 900, such as the operations associated with display, telephone calls, data communications, camera operations, and recording operations. The processing component 902 may include one or more processors 918 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the terminal 900. Examples of such data include instructions for any applications or methods operated on the terminal 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the terminal 900. The power component 906 may include a power management system, one or more power sources, and any other components associated with the generation, management, and distribution of power in the terminal 900.

The multimedia component 908 includes a screen providing an output interface between the terminal 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the terminal 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the terminal 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the terminal 900. For instance, the sensor component 914 may detect an open/closed status of the terminal 900, relative positioning of components, e.g., the display and the keypad, of the terminal 900, a change in position of the terminal 900 or a component of the terminal 900, a presence or absence of user contact with the terminal 900, an orientation or an acceleration/deceleration of the terminal 900, and a change in temperature of the terminal 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the terminal 900 and other devices. The terminal 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

In example embodiments, the terminal 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 918 in the terminal 900, for performing the above-described methods. For example, the non-transitory computer-readable storage medium may be a ROM, a RAM, a CD-ROM, a magnetic tape, a floppy disc, an optical data storage device, and the like.

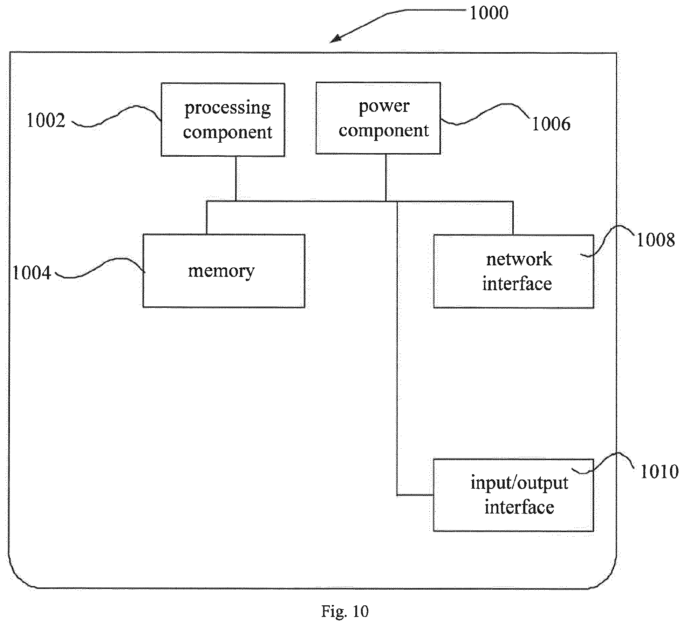

Fig. 10 is a block diagram illustrating a server according to an example embodiment of the present disclosure. For example, a server 1000 may be provided as a network-side device. Referring to Fig. 10, the server 1000 may include a processing component 1002 which further includes one or more processors, and a memory resource represented by a memory 1004, in which the memory resource is configured to store an instruction executed by the processing component 1002, such as an application. Applications stored in the memory 1004 may include one or more modules corresponding to a series of instructions. Furthermore, the processing component 1002 may be configured to execute the series of instructions so as to execute acts executed by the server in method embodiments of the present disclosure.

The server 1000 may further include a power component 1006 configured to execute power management of the server 1000, a wired or wireless network interface 1008 configured to connect the server 1000 to a network, and an input-output (I/O) interface 1010. The server may operate based on one or more operating systems such as Windows ServerTM, Mac OS XTM, UnixTM, LinuxTM, FreeBSDTM or the like stored in the memory 1004.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for displaying information, comprising:
a device sending (201) bank card information of a bound bank card, bound to the device, to a server;
the device sending (203) a geographical location to the server;
the device receiving (207) commercial service information pushed by the server, wherein the commercial service information matches the bank card information and the geographical location; and
the device displaying (208) the commercial service information.

2. The method according to claim 1, wherein the device sending (201) bank card information of a bound bank card to a server comprises:
the device sending (305) the bank card information to the server via a payment application, wherein the payment application is bound with at least one bank card.

3. The method according to claim 1 or claim 2, wherein the device sending (203) a geographical location to the server comprises:
the device sending the geographical location to the server during booting up of the device;
or,
the device sending the geographical location to the server at a start time of a payment application;
or,
the device sending the geographical location to the server at a predetermined time interval.

4. The method according to any preceding claim, wherein the device displaying (208) the commercial service information comprises:
the device displaying a GUI of a card, wherein the GUI of the card comprises at least one virtual bank card, wherein all or a part of a content of the commercial service information is displayed on a surface of the at least one virtual bank card.

5. The method according to claim 4, wherein if the part of the content of the commercial service information is displayed on the surface, the method further comprises:
the device displaying (312c) all of the content of the commercial service information if a first triggering signal is received on the part of the content.

6. The method according to claim 4 or claim 5, wherein an aggregation logo is displayed on the surface of the at least one virtual bank card, in which the aggregation logo is configured to indicate that a number of items of the commercial service information corresponding to the at least one virtual bank card exceeds a preset number, the method further comprises:
the device jumping to (312d) a GUI of a list corresponding to the at least one virtual bank card if a second triggering signal is received on the aggregation logo, wherein the GUI of the list comprises each of the items of the commercial service information corresponding to the at least one virtual bank card respectively.

7. The method according to any of claims 4 to 6, further comprising:
the device displaying (312e) card information corresponding to the at least one virtual bank card if a third triggering signal is received on the surface of the at least one virtual bank card, wherein the card information comprises at least the commercial service information; and
the device jumping to (312f) a GUI of a list corresponding to the at least one virtual bank card if a fourth triggering signal is received on the commercial service information, wherein the GUI of the list comprises each of items of the commercial service information corresponding to the at least one virtual bank card respectively.

8. The method according to any of claims 4-7, further comprising:
the device displaying (312g) a GUI of a vendor corresponding to the commercial service information if a fifth triggering signal is received on the commercial service information, wherein the GUI of the vendor comprises information of the vendor corresponding to the commercial service information.

9. The method according to any of claims 4-7, further comprising:
the device displaying (312a) a notification message after the commercial service information is received; and
the device displaying (312b) the GUI of the card if the notification message is triggered.

10. A method for pushing information, comprising:
at least one server acquiring (202) bank card information bound to a terminal;
the at least one server acquiring (204) a geographical location of the terminal;
the at least one server querying (205) commercial service information matching the bank card information and the geographical location; and
the at least one server pushing (206) the commercial service information to the terminal.

11. The method according to claim 10, wherein the at least one server acquiring (202) bank card information bound to a terminal comprises:
the at least one server acquiring the bank card information sent by a payment application in the terminal, wherein the payment application is bound with at least one bank card.

12. The method according to claim 10 or claim 11, wherein the at least one server acquiring (204) a geographical location of the terminal comprises:
the at least one server acquiring the geographical location sent by the terminal at a preset time, wherein the preset time comprises at least one of:
a time when the terminal is booting up;
a starting time of a payment application in the terminal; and
a time determined by a predetermined time interval.

13. The method according to any of claims 10 to 12, wherein the at least one server querying (205) commercial service information matching the bank card information and the geographical location comprises:
the at least one server querying (309) the commercial service information satisfying a preset condition in a database of the commercial service information, wherein the preset condition comprises: a supported card type matching the bank card information, and, a distance between a location of a vendor and the geographical location less than a preset threshold.

14. A device for displaying information, comprising:
a sending module (720), configured to send bank card information of a bound bank card, bound to the device, to a server, and to send a geographical location to the server;
a receiving module (740), configured to receive commercial service information pushed by the server, wherein the commercial service information matches the bank card information and the geographical location; and
a displaying module (760), configured to display the commercial service information.

15. A device for pushing information, comprising:
an acquiring module (820), configured to acquire bank card information bound to a terminal and to acquire a geographical location of the terminal;
a querying module (840), configured to query commercial service information matching the bank card information and the geographical location; and
a pushing module (860), configured to push the commercial service information to the terminal.
